# FASCICULE DE BREVET EUROPEEN

(11) **EP 1 320 734 B1**
(45) Date de publication et mention de la délivrance du brevet: **22.03.2006**
(21) Numéro de dépôt: 01967432.4
(22) Date de dépôt: 06.09.2001
(51) Int. Cl.: G01L 5/00, G01L 5/22

(54) **DISPOSITIF DE MESURE SANS FIL DE L'EFFORT EXERCE DANS UNE TIGE MOBILE AXIALEMENT**
VORRICHTUNG ZUR DRAHTLOSEN KRAFTMESSUNG AN EINER SICH AXIAL BEWEGENDEN STANGE
WIRELESS DEVICE FOR MEASURING AN AXIALLY MOBILE ROD

(30) Priorité: 15.09.2000 FR 0011838
(43) Date de publication de la demande: 25.06.2003
(73) Titulaire: ROBERT BOSCH GMBH, 70469 Stuttgart (DE)
(72) Inventeur: COCHELIN, Thomas, F-SAINT CLAR 31600 (FR); FOURCADE, Jean, F-77420 CHAMPS SUR MARNE (FR); GENDRIN, Stéphane, F-34170 BRUZ (FR); DIVOUX, Cyrill, F-77184 EMERAINVILLE (FR)
(74) Mandataire: Hurwic, Aleksander Wiktor
(86) Numéro de dépôt international: PCT/FR2001/002763
(87) Numéro de publication internationale: WO 2002/023147

(56) Documents cités:
- EP-A- 0 159 825
- EP-A- 0 536 806
- EP-A- 0 967 131
- WO-A-97/49996
- MIZIER M -O: "MESURES SUR MACHINES TOURNANTES UNE SOLUTION: LA TELEMESURE" MESURES REGULATION AUTOMATISME,FR,CFE. PARIS, vol. 53, no. 9, 20 juin 1988 (1988-06-20), pages 41-42,44,46, XP000046254 ISSN: 0755-219X

## Description

La présente invention concerne un dispositif de mesure sans fil de l'effort dans une tige mobile axialement.

Un amplificateur d'effort ou servomoteur pneumatique d'assistance au freinage comprend une enveloppe rigide constituée de deux coquilles, d'une part le couvercle et d'autre part le cylindre, qui sont serties entre elles. A l'intérieur de l'enveloppe du servomoteur pneumatique d'assistance au freinage, une chambre avant à volume variable est séparée d'une chambre arrière à volume variable par une membrane étanche souple et par une jupe rigide entraînant un piston pneumatique prenant appui, par l'intermédiaire d'une tige de commande, sur le piston primaire d'un maître-cylindre tandem d'un circuit hydraulique de freinage. La chambre avant dirigée vers le maître-cylindre tandem est reliée hydrauliquement à une source de vide alors que la chambre arrière est reliée hydrauliquement, de manière contrôlée par une valve, à une source de fluide propulseur, typiquement de l'air sous pression atmosphérique.

Dans ce type de structure, il serait utile de mesurer en temps réel l'effort exercé sur la tige de commande du servomoteur pneumatique d'assistance au freinage ou dans un maître cylindre et de transmettre cette information vers une unité de traitement pour fournir au système de freinage une information d'entrée concernant l'effort exercé sur le frein.

Il serait également intéressant de pouvoir réaliser ce type de mesures dans un maître cylindre relié directement à la pédale de frein.

De manière habituelle, la transmission d'une mesure d'effort s'effectue par la transmission par l'intermédiaire de fils d'une information sous forme de signal électrique depuis le capteur d'effort, qui est monté sur l'élément dans lequel la mesure est faite, vers une unité de traitement.

Dans le cas de la mesure de l'effort dans la tige de commande entraînable en déplacement axialement dans le servomoteur pneumatique d'assistance au freinage ou dans le maître cylindre, il est nécessaire de monter le capteur d'effort sur la tige de commande, qui est mobile, puis de le relier à l'unité de traitement qui est fixe.

Il s'ensuit alors un problème de fiabilité et de résistance des fils qui sont mis en oeuvre pour réaliser cette transmission filaire. De plus, il apparaît difficile de loger une connectique robuste sur la tige de commande mobile à côté du capteur d'effort.

On connaît des dispositifs de transmission sans fil d'un signal de mesure, en particulier dans US-A-4 749 993, d'un capteur vers une unité de traitement par une première paire de bobines électriques, ledit capteur comprenant un circuit d'alimentation en énergie qui reçoit un signal d'énergie à basse fréquence d'une seconde paire de bobines électriques et amène ce signal à un oscillateur de transmission qui répond à une quantité physique mesurée et permet à un signal de mesure de moyenne fréquence d'être transmis sur la première paire de bobines électriques. Dans ce document, le capteur est monté sur une pièce entraînée en rotation par rapport à la partie de couplage qui est stationnaire et peut servir par exemple à la transmission discontinue de la pression d'un pneumatique.

Le but de la présente invention est de proposer un dispositif de mesure sans fil de l'effort exercé sur une tige mobile axialement qui soit fiable et ne nécessite pas de modification trop importante.

A cet effet, l'invention a pour objet un dispositif de mesure sans fil de l'effort exercé dans une tige mobile axialement comportant une unité de traitement (U) et un capteur d'effort, caractérisé en ce qu'il comprend une première bobine électrique alimentant le capteur d'effort en énergie depuis l'unité de traitement et une seconde bobine électrique transmettant un signal électrique depuis le capteur d'effort vers l'unité de traitement, ladite première bobine électrique étant fixe et logée dans un manchon entourant ladite tige de mobile et la seconde bobine électrique étant mobile, montée sur ladite tige de mobile, lesdites première et seconde bobines étant coaxiales et ladite seconde bobine se déplaçant axialement au sein de ladite première bobine fixe, l'alimentation en énergie et la transmission du signal électrique de mesure s'effectuant de manière continue.

Ainsi, de manière avantageuse, le dispositif de mesure est sans fil et permet de s'affranchir d'une liaison filaire tant pour l'alimentation en énergie du capteur d'effort que pour la récupération du signal de mesure d'effort sur la course de la tige de commande.

De préférence, la course de la tige se situe dans la plage de 40 à 50 mm.

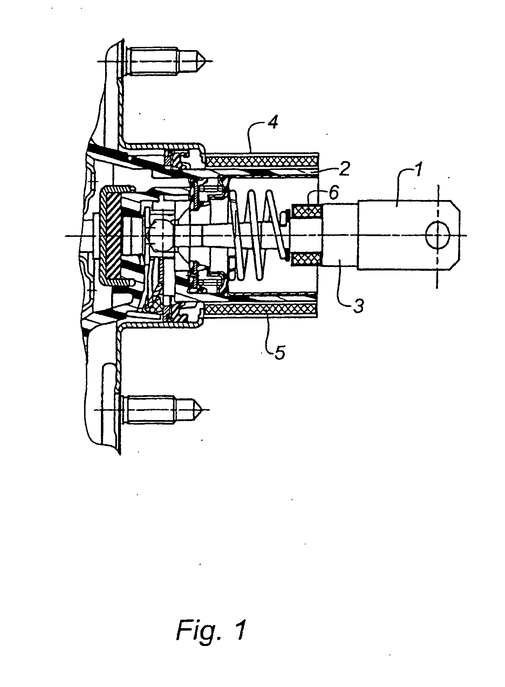

On décrira maintenant plus en détail un exemple de réalisation de l'invention en référence au dessin dans lequel la figure unique représente une vue en coupe partielle d'un servomoteur pneumatique d'assistance au freinage comportant un dispositif de mesure sans contact selon l'invention.

La tige 1 est mobile axialement dans le corps de piston 2 dans le servomoteur pneumatique d'assistance au freinage. Sur cette tige de commande 1 est monté le capteur d'effort 3.

Cette tige mobile 1 se déplace axialement dans le servomoteur pneumatique d'assistance au freinage et est entourée d'un manchon 4 dans lequel est logée, entourant ladite tige de commande 1, une première bobine électrique 5 fixe.

Sur la tige de commande 1, est montée une seconde bobine électrique 6 coaxiale à la première bobine 5, entourant ladite tige 1 et, par conséquent, mobile.

La première bobine 5 est alimentée en tension sinusoïdale depuis l'unité de traitement U et crée un flux A qui varie dans la seconde bobine 6. Une tension est alors induite aux bornes de ladite seconde bobine 6 qui est reliée au capteur d'effort 3 et l'alimente en tension.

Lorsque le capteur 3 agit, il émet un signal électrique S dans la seconde bobine 6 dont l'amplitude dépend de l'effort exercé sur la tige mobile 1. Ce signal électrique S est reçu par la première bobine 5 qui est reliée à l'unité de traitement U.

De préférence, la tige mobile 1 est réalisée en acier et l'entrefer entre les deux bobines 5, 6 est de 0,5 à 2 mm en radial.

De préférence, la première bobine ou bobine fixe 5 est plus longue que la seconde bobine ou bobine mobile 6 de telle sorte que la tension induite dans la bobine mobile 6 varie moins le long de la course de la tige mobile 1.

L'invention s'applique principalement à l'industrie des dispositifs de freinages de véhicules automobiles et notamment pour voitures particulières et en particulier à la réalisation de servomoteurs pneumatiques d'assistance au freinage comprenant l'un des dispositifs décrit ci-dessus et/ou de maîtres-cylindres, notamment de maîtres-cylindres tandem comprenant l'un des dispositifs décrit ci-dessus.

## Revendications

1. Dispositif de mesure sans fil de l'effort exercé sur une tige (1) mobile axialement comportant une unité de traitement (U) et un capteur d'effort (3),
**caractérisé en ce qu'**il comprend une première bobine électrique (5) alimentant le capteur d'effort (3) en énergie depuis une unité de traitement (U) et une seconde bobine électrique (6) transmettant un signal électrique depuis le capteur d'effort (3) vers l'unité de traitement (U), la première bobine électrique (5) étant fixe et logée dans un manchon (4) entourant ladite tige mobile (1) et la seconde bobine électrique (6) étant mobile, montée sur ladite tige mobile (1), lesdites première (5) et seconde (6) bobines étant coaxiales et ladite seconde bobine (6) se déplaçant axialement au sein de ladite première bobine fixe (5), l'alimentation en énergie et la transmission du signal électrique de mesure s'effectuant de manière continue.

2. Dispositif selon la revendication 1,
**caractérisé en ce que** la première bobine (5) est alimentée en tension sinusoïdale depuis l'unité de traitement et crée un flux (A) qui varie dans la seconde bobine (6), une tension étant alors induite aux bornes de ladite seconde bobine (6) qui est reliée au capteur d'effort (3) et l'alimente en tension.

3. Dispositif selon l'une des revendications 1 et 2,
**caractérisé en ce que** la tige mobile (1) est en acier et l'entrefer entre les deux bobines (5,6) est situé dans la plage de 0,5 à 2 mm.

4. Dispositif selon l'une des revendications 1 à 3,
**caractérisé en ce que** la première bobine ou bobine fixe (5) est plus longue que la seconde bobine ou bobine mobile (6) de telle sorte que la tension induite dans la bobine mobile (6) varie moins le long de la course.

5. Dispositif selon l'une des revendications 1 à 4,
**caractérisé en ce que** la course de la tige mobile (1) se situe dans la plage de 40 à 50 mm.

6. Servomoteur pneumatique d'assistance au freinage,
**caractérisé en ce qu'**il comprend un dispositif de mesure selon l'une des revendications 1 à 5.

7. Maître-cylindre, notamment maître-cylindre tandem,
**caractérisé en ce qu'**il comporte un dispositif de mesure selon l'une des revendications 1 à 5.

## Patentansprüche

1. Vorrichtung zur drahtlosen Messung der Kraft, die auf eine axial bewegliche Stange (1) ausgeübt wird, mit einer Verarbeitungseinheit (U) und einem Kraftsensor (3), **dadurch gekennzeichnet, dass** sie eine erste elektrische Spule (5) aufweist, die den Kraftsensor (3) ausgehend von der Verarbeitungseinheit (U) mit Energie versorgt, sowie eine zweite elektrische Spule (6), die ein elektrisches Signal von dem Kraftsensor (3) zur Verarbeitungseinheit (U) überträgt, wobei die erste elektrische Spule (5) fest und in einer die bewegliche Stange (1) umgebenden Hülse (4) angeordnet ist und die zweite elektrische Spule (6) beweglich und an der beweglichen Stange (1) angebracht ist, wobei die erste Spule (5) und die zweite Spule (6) koaxial sind und sich die zweite Spule (6) innerhalb der ersten, festen Spule (5) axial verlagert, wobei die Energieversorgung und die Übertragung des elektrischen Messsignals kontinuierlich erfolgen.

2. Vorrichtung nach Anspruch 1, **dadurch gekennzeichnet, dass** die erste Spule (5) ausgehend von der Verarbeitungseinheit mit einer Sinusspannung versorgt wird und einen Fluss (A) erzeugt, der in der zweiten Spule (6) variiert, wobei dann an den Anschlüssen der zweiten Spule (6), die mit dem Kraftsensor (3) verbunden ist und diesen mit Spannung versorgt, eine Spannung induziert wird.

3. Vorrichtung nach Anspruch 1 oder 2, **dadurch gekennzeichnet, dass** die bewegliche Stange (1) aus Stahl ist und der Spalt zwischen den beiden Spulen (5, 6) zwischen 0,5 und 2 mm beträgt.

4. Vorrichtung nach einem der Ansprüche 1 bis 3, **dadurch gekennzeichnet, dass** die erste Spule oder feste Spule (5) länger ist als die zweite Spule oder bewegliche Spule (6), so dass die induzierte Spannung in der beweglichen Spule (6) entlang des Weges weniger variiert.

5. Vorrichtung nach einem der Ansprüche 1 bis 4, **dadurch gekennzeichnet, dass** der Weg der beweglichen Stange (1) zwischen 40 und 50 mm beträgt.

6. Pneumatischer Servomotor zur Bremsunterstützung, **dadurch gekennzeichnet, dass** er eine Messvorrichtung nach einem der Ansprüche 1 bis 5 aufweist.

7. Hauptzylinder, insbesondere Tandemhauptzylinder, **dadurch gekennzeichnet, dass** er eine Messvorrichtung nach einem der Ansprüche 1 bis 5 aufweist.

## Claims

1. Wireless measuring device for a force exerted on an axially-moving rod (1), said device comprising a processing unit (U) and a force sensor (3),
**characterised in that** it comprises a first electrical coil (5) for the power supply of the force sensor (3) from the processing unit (U), and a second electrical coil (6) for the transmission of an electrical signal from the force sensor (3) towards the processing unit (U), said first electrical coil (5) being stationary and housed within a sleeve (4) arranged about said moving rod (1) whereas the second electrical coil (6) is a moving one, fitted on said moving rod (1), wherein said first (5) and second (6) coils are coaxial and said second coil (6) travels axially within said first stationary coil (5), the power supply as well as the transmission of the electrical measurement signal being carried out in a continuous manner.

2. Device according to claim 1,
**characterised in that** said first coil (5) is supplied with a sinusoidal voltage from the processing unit (U), and generates a flux (A), varying inside the second coil (6), as a result of which a voltage is induced across said second coil (6), which is connected to the force sensor (3) for the voltage supply of the latter.

3. Device according to claim 1 or 2,
**characterised in that** said moving rod (1) is made of steel and **in that** the air gap between said coils (5, 6) ranges from 0.5 to 2 mm.

4. Device according to any one of claims 1 to 3,
**characterised in that** said first coil or stationary coil (5) is longer than said second coil or moving coil (6), so that the induced voltage in the moving coil (6) may vary to a lesser extent throughout the travel.

5. Device according to any one of claims 1 to 4,
**characterised in that** the stroke of the moving rod (1) ranges from 40 to 50 mm.

6. Pneumatic servomotor for an assisted braking,
**characterised in that** it comprises a measuring device according to any one of claims 1 to 5.

7. Master cylinder, more particularly a tandem master cylinder,
**characterised in that** it comprises a measuring device according to any one of claims 1 to 5.
